# EUROPEAN PATENT SPECIFICATION

(11) **EP 3 015 353 B1**
(45) Date of publication and mention of the grant of the patent: **03.05.2017**
(21) Application number: 15175853.9
(22) Date of filing: 08.07.2015
(51) Int. Cl.: B62K 11/04, B62K 19/10, B62K 19/30

(54) **Straddle-type vehicle**
Grätschsitz-Fahrzeug
Véhicule du type à enfourcher

(30) Priority: 31.10.2014 JP 2014223773
(43) Date of publication of application: 04.05.2016
(73) Proprietor: Yamaha Hatsudoki Kabushiki Kaisha, Iwata-shi, Shizuoka 438-8501 (JP)
(72) Inventor: Toyosato, Tetsuo, Iwata-shi, Shizuoka 438-8501 (JP); Kobayashi, Yuta, Iwata-shi, Shizuoka 438-8501 (JP); Hirai, Mitsuo, Iwata-shi, Shizuoka 438-8501 (JP)
(74) Representative: Grünecker Patent- und Rechtsanwälte PartG mbB

(56) References cited:
- WO-A1-2012/057159
- WO-A1-2012/147190
- WO-A2-2007/052298

## Description

The present invention relates to a straddle-type vehicle, and more particularly relates to a vehicle comprising a body frame and a single-cylinder engine that is supported by the body frame.

Prior art document WO 2012/057159 A1 discloses a two-wheeled vehicle, comprising: a head pipe that steerably supports front forks that rotatably support a front wheel; a main frame that extends in the vehicle rear direction from this head pipe; an engine with a crank case arranged in the lower part of this main frame and a cylinder that extends diagonally upwards from this crank case. A bypass section is disposed in the front section of the main frame, when viewed from the vehicle side surface, and extends from the bottom tip of the rear surface of the head pipe diagonally upwards towards the vehicle rear, and bypasses the upper surface of the cylinder.

A straddle-type vehicle comprising a body frame and an engine that is supported by the body frame was known in the past. The body frame in a vehicle such as this may have a configuration in which a single main frame and a single down frame extend from a head pipe. This main frame includes a forward and backward extension that extends rearward from the head pipe, and an up and down extension that extends downward from the rear end of the forward and backward extension and is disposed to the rear of the engine.

For example, JP 2009-214625 A discloses a straddle-type vehicle comprising a body frame that has a down frame and a main frame that includes a forward and backward extension and an up and down extension. With this vehicle, the engine is supported at three places on the body frame. More specifically, the engine is supported by engine supports provided to the forward and backward extension, the up and down extension, and the down frame. Therefore, if a bending load is exerted on the body frame, the engine reduces the deformation of the body frame. Specifically, the rigid engine increases the stiffness of the body frame.

The vehicle disclosed in JP 2009-214625 A comprises a pipe member and a gusset (connecting member). The pipe member and the gusset link the forward and backward extension and the down frame. The pipe member increases the stiffness of the body frame when a load is exerted that pushes the front wheel to the rear.

As discussed above, the stiffness of the body frame is relatively high in the vehicle disclosed in JP 2009-214625 A. Therefore, a feature of this vehicle is that engine vibration tends to be transmitted to the handlebar through the body frame and the steering mechanism. Also, since the engine and the handlebar are generally close together in a vehicle in which the front end of the engine is located ahead of the rear end of the handlebar, there tends to be more vibration transmitted to the handlebar. Since vibration transmitted to the handlebar is readily felt by the rider, it is preferably reduced.

One type of engine that is provided a straddle-type vehicle is a single-cylinder engine. A single-cylinder engine is one piston that moves reciprocally in a single cylinder. With a single-cylinder engine, the reciprocal operation of the single piston is a source of vibration. A single-cylinder engine has no other pistons to perform reciprocal operation in a different phase from the above-mentioned piston, and therefore the reciprocal operation of the piston tends to produce more vibration in a single-cylinder engine.

A balancer is a known means for damping the vibration generated by the reciprocal operation of a piston. A balancer has a balancer shaft and a balancer weight that is attached to the balancer shaft. The balancer works by rotating the balancer weight around the balancer shaft according to the reciprocal operation of the piston, and generating momentum in a different phase from the momentum based on the reciprocal operation of the piston. This damps the vibration of a single-cylinder engine.

The balancer weight has enough weight to damp the vibration of the single-cylinder engine. Therefore, when a balancer is provided to a single-cylinder engine, it increases the weight of the vehicle.

Meanwhile, there has been a growing need to reduce the weight of vehicles from the standpoint of fuel economy and the like. It is for this reason that a balancer may sometimes be omitted from a single-cylinder engine. However, simply removing the balancer from a single-cylinder engine will result in more vibration in the vibration and an increase in the amount of vibration transmitted to the handlebar.

It is an object of the present invention to provide a straddle-type vehicle with which less engine vibration is transmitted to the handlebar.

According to the present invention said object is solved by straddle-type vehicle having the features of independent claim 1. Preferred embodiments are laid down in the dependent claims.

The straddle-type vehicle pertaining to an embodiment comprises a body frame, a steering mechanism that includes a handlebar and is supported by the body frame so as to be able to rotate around a steering axis, a front wheel that is supported by the steering mechanism, and a single-cylinder engine that is disposed so that its front end is located ahead of the rear end of the handlebar. The body frame has a head pipe that supports the steering mechanism; a main frame that includes a forward and backward extension that is directly connected to the head pipe and extends rearward from the head pipe and at least part of which is disposed in the center in the vehicle width direction, and an up and down extension that extends downward from the rear end of the forward and backward extension; a down frame that is directly connected to the head pipe below the connection between the head pipe and the forward and backward extension, and that extends downward from the head pipe; and a connecting member that connects the main frame and the down frame. The lower end of the down frame is located higher than the lower end of the single-cylinder engine. The single-cylinder engine is attached to the up and down extension and the down frame, but not to the forward and backward extension. The down frame has a mount for the single-cylinder engine at a portion located ahead of the front edge of the single-cylinder engine in a vehicle side view. The connecting member includes a main frame coupling portion that extends in the vehicle forward and backward direction and is coupled to the forward and backward extension, and a down frame coupling portion that extends in the vehicle up and down direction and is coupled to the down frame. The lower end of the down frame coupling portion is located lower than the upper end of the single-cylinder engine. The rear end of the main frame coupling portion is located to the rear of a straight line that is parallel to the steering axis and passes through the lower end of the down frame coupling portion in a vehicle side view.

### BRIEF DESCRIPTION OF THE DRAWINGS

FIG. 1 is a side view of the straddle-type vehicle pertaining to an embodiment;
FIG. 2 is an oblique front view of the body frame had by the vehicle shown in FIG. 1;
FIG. 3 is an oblique rear view of the body frame shown in FIG. 2;
FIG. 4 is a partial side view of the body frame shown in FIG. 2;
FIG. 5 is a simplified diagram of the internal structure of the single-cylinder engine in a conventional vehicle; and
FIG. 6 is a simplified diagram of the internal structure of the single-cylinder engine in the vehicle shown in FIG. 1.

### DESCRIPTION OF THE EMBODIMENTS

The straddle-type vehicle pertaining to an embodiment comprises a body frame, a steering mechanism that includes a handlebar and is supported by the body frame so as to be able to rotate around a steering axis, a front wheel that is supported by the steering mechanism, and a single-cylinder engine that is disposed so that its front end is located ahead of the rear end of the handlebar. The body frame has a head pipe that supports the steering mechanism; a main frame that includes a forward and backward extension that is connected to the head pipe and extends rearward from the head pipe and at least part of which is disposed in the center in the vehicle width direction, and an up and down extension that extends downward from the rear end of the forward and backward extension; a down frame that is connected to the head pipe below the connection between the head pipe and the forward and backward extension, and that extends downward from the head pipe; and a connecting member that connects the main frame and the down frame. The lower end of the down frame is located higher than the lower end of the single-cylinder engine. The single-cylinder engine is attached to the up and down extension and the down frame, but not to the forward and backward extension. The down frame has a mount for the single-cylinder engine at a portion located ahead of the front edge of the single-cylinder engine in a vehicle side view. The connecting member includes a main frame coupling portion that extends in the vehicle forward and backward direction and is coupled to the forward and backward extension, and a down frame coupling portion that extends in the vehicle up and down direction and is coupled to the down frame. The lower end of the down frame coupling portion is located lower than the upper end of the single-cylinder engine. The rear end of the main frame coupling portion is located to the rear of a straight line that is parallel to the steering axis and passes through the lower end of the down frame coupling portion in a vehicle side view.

A conventional vehicle has a down frame and a main frame that includes a forward and backward extension and an up and down extension, and the forward and backward extension and the down frame are linked by a pipe member. The forward and backward extension, the up and down extension, and the down frame are each provided with an engine support, and a single-cylinder engine provided with a balancer is supported by the engine supports at these three places.

In recent years there has been a growing need to reduce the weight of vehicles from the standpoint of fuel economy and the like. Thus, the inventors of the vehicle pertaining to an embodiment first attempted to remove the balancer from a single-cylinder engine in order to reduce the weight of the vehicle. Nevertheless, the inventors ran into a problem in that removing the balancer from the single-cylinder engine increased the amount of vibration transmitted to the handlebar.

In view of this, the inventors of the vehicle pertaining to an embodiment turned their attention to the fact that the main frame has a forward and backward extension that is at least partially disposed in the center in the vehicle width direction. The inventors then attempted to increase the amount of elastic deformation of the body frame by eliminating the engine support from the forward and backward extension. Specifically, with the vehicle pertaining to an embodiment, the single-cylinder engine is not attached to the forward and backward extension. With this configuration, less vibration is transmitted from the single-cylinder engine to the handlebar than with a configuration in which an engine support is provided to the forward and backward extension.

However, it was found that eliminating the engine support at the forward and backward extension tended to result in inadequate strength of the down frame when a load is exerted that pushes the front wheel to the rear. As will be discussed below, the inventors of the vehicle pertaining to an embodiment ascertained that the pipe member that was provided in the past for the purpose of ensuring enough stiffness in the body frame is a factor in causing inadequate strength in the down frame.

As mentioned above, in the past, the forward and backward extension and the down frame both had an engine support, and the forward and backward extension and the down frame were linked by a pipe member. Thus, the forward and backward extension and the down frame both had high stiffness. However, when the engine support of the forward and backward extension is eliminated, the stiffness of the forward and backward extension decreases. Therefore, the forward and backward extension can undergo elastic deformation when subjected to a load that pushes the front wheel to the rear, and then disperses the stress. On the other hand, since the down frame has an engine support, it is stiffer than the forward and backward extension. Therefore, stress ends up being concentrated in the down frame when a load is exerted that pushes the front wheel to the rear.

One way to increase the strength of the down frame is to reinforce the area around where the down frame is connected to the pipe member. When the down frame is reinforced, however, this increases the weight of the vehicle.

In view of this, the inventors of the vehicle pertaining to an embodiment tried eliminating the pipe member that was provided in order to increase the stiffness of the body frame, for avoiding the decrease in the strength of the down frame. Eliminating the pipe member avoids the decrease in the strength of the down frame attributable to the pipe member.

Meanwhile, the inventors of the vehicle pertaining to an embodiment increased the size of the connection member where the forward and backward extension is connected to the down frame. Specifically, with the vehicle pertaining to an embodiment, the connecting member is configured so that the lower end of the down frame coupling portion that is coupled to the down frame is located lower than the upper end of the single-cylinder engine. Also, the connecting member is configured so that the rear end of the main frame coupling portion that is coupled to the forward and backward extension is located to the rear of a straight line that is parallel to the steering axis and passes through the lower end of the down frame coupling portion in a vehicle side view.

With the above configuration, a sufficiently large coupled portion can be ensured between the connecting member and the down frame. This moderates the concentration of stress at the coupled portion between the connecting member and the down frame. Also, the above configuration ensures a sufficiently large coupled portion between the connecting member and the forward and backward extension. Therefore, a load exerted on the down frame is more readily transmitted to the forward and backward extension, so the concentration of stress in the down frame can be further moderated. As a result, this avoids a decrease in the strength of the down frame.

With the vehicle pertaining to an embodiment, since the connecting member is larger than in a conventional vehicle, there is an increase in the weight of the connecting member. However, since the engine is not attached to the forward and backward extension in this vehicle, there is no need for an engine support on the forward and backward extension as in the past. Also, no pipe member is provided to the vehicle for linking the forward and backward extension and the down frame. Thus, good strength can be ensured in the down frame, and the overall weight of the vehicle can also be reduced.

As discussed above, with the vehicle pertaining to an embodiment, the transmission of engine vibration to the handlebar can be suppressed, while avoiding a decrease in the strength of the down frame and decreasing the weight of the vehicle.

The above vehicle may be configured so that, in a vehicle side view, the distance from the point of intersection between the axis of the down frame and the axis of the forward and backward extension to the rear end of the main frame coupling portion is longer than the distance from the point of intersection between the axis of the down frame and the axis of the forward and backward extension to the lower end of the down frame coupling portion.

With the above configuration, adequate size can be more reliably ensured in the coupled portion between the connecting member and the forward and backward extension. Therefore, any load that is exerted on the down frame will even more readily be transmitted to the forward and backward extension. Thus, the concentration of stress in the down frame can be moderated, and a decrease in the strength of the down frame can be avoided.

The above vehicle may be configured so that the upper end of the down frame coupling portion is located higher than the lower end of the head pipe.

With the above configuration, adequate size can be more reliably ensured in the coupled portion between the connecting member and the down frame. Therefore, the concentration of stress in the coupled portion between the connecting member and the down frame can be further moderated. As a result, this avoids a decrease in the strength of the down frame.

With the above vehicle, the front end of the main frame coupling portion may be located ahead of the point of intersection between the axis of the forward and backward extension and the center line between the steering axis and a straight line that is parallel to the steering axis and passes through the lower end of the down frame coupling portion.

With the above configuration, adequate size can be more reliably ensured in the coupled portion between the connecting member and the forward and backward extension. Therefore, load will more readily be transmitted from the down frame to the forward and backward extension, and the concentration of stress in the down frame can be moderated. As a result, a decrease in the strength of the down frame can be avoided.

With the above vehicle, the body frame may have a plurality of attachment holes for attaching the single-cylinder engine, and the attachment holes may all be disposed lower than the lower end of the forward and backward extension.

With the above configuration, no attachment holes are provided to the forward and backward extension. Therefore, the single-cylinder engine is not attached to the forward and backward extension. Thus, less vibration will be transmitted from the single-cylinder engine to the handlebar.

The attachment holes may all be provided to the down frame and the up and down extension.

With the above configuration, since the attachment holes are not provided to the forward and backward extension, the single-cylinder engine is not attached to the forward and backward extension. Thus, less vibration will be transmitted from the single-cylinder engine to the handlebar.

### Embodiments

Embodiments will now be described through reference to the drawings. Those components that are the same or equivalent in the drawings will be numbered the same, and will not be described more than once.

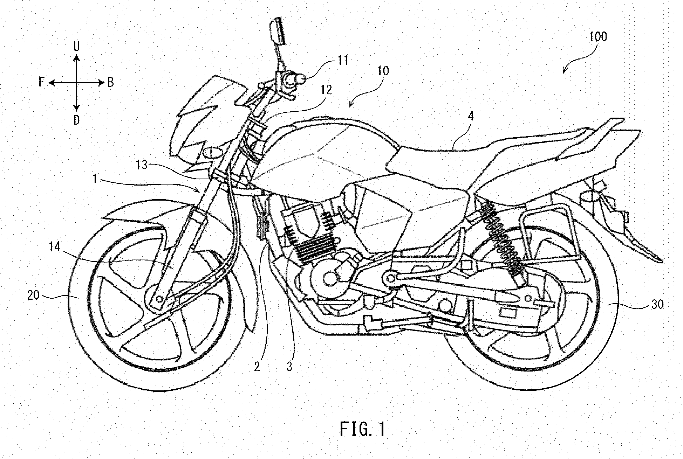

FIG. 1 is a left side view of the straddle-type vehicle 100 pertaining to an embodiment. The forward and backward direction, the left and right direction, and the up and down direction referred to in these embodiments mean the forward and backward direction, the left and right direction, and the up and down direction as seen from a rider on the straddle-type vehicle 100. The left and right direction is also called the vehicle width direction. In the drawings, the arrow F indicates the front, and the arrow B the back. In the drawings, the arrow L indicates the left, and the arrow R the right. In the drawings, the arrow U indicates up, and the arrow D down.

In this embodiment, when a given member is said to extend upward, or downward, or in the up and down direction, this means that the length in the up and down direction of that member is greater than its length in the forward and backward direction and the left and right direction. Specifically, a member that extends upward, or downward, or in the up and down direction includes not only a member that is parallel to the up and down direction, but also a member that is inclined to the up and down direction, a member that is curved with respect to the up and down direction, and so forth.

In this embodiment, when a given member is said to extend forward, or rearward, or in the forward and backward direction, this means that the length in the forward and backward direction of that member is greater than its length in the up and down direction and the left and right direction. Specifically, a member that extends forward, or rearward, or in the forward and backward direction includes not only a member that is parallel to the forward and backward direction, but also a member that is inclined to the forward and backward direction, a member that is curved with respect to the forward and backward direction, and so forth.

In this embodiment, when a given member is said to extend to the left, or to the right, or in the left and right direction, this means that the length in the left and right direction of that member is greater than its length in the up and down direction and the forward and backward direction. Specifically, a member that extends to the left, or to the right, or in the left and right direction includes not only a member that is parallel to the left and right direction, but also a member that is inclined to the left and right direction, a member that is curved with respect to the left and right direction, and so forth.

In this embodiment, something that extends in the up and down direction refers to not just something that extends parallel to the up and down direction, and also includes something that extends in a direction that is inclined within a range of ±45° to the up and down direction. Something that extends in a direction that is closer to the up and down direction than to the forward and backward direction or the left and right direction is included in the definition of something that extends in the up and down direction.

Similarly, something that extends in the forward and backward direction refers to not just something that extends parallel to the forward and backward direction, and also includes something that extends in a direction that is inclined within a range of ±45° to the forward and backward direction. Something that extends in a direction that is closer to the forward and backward direction than to the left and right direction or the up and down direction is included.

Furthermore, something that extends in the left and right direction refers to not just something that extends parallel to the left and right direction, and also includes something that extends in a direction that is inclined within a range of ±45° to the left and right direction. Something that extends in a direction that is closer to the left and right direction than to the forward and backward direction or the up and down direction is included.

### Overall Configuration

As shown in FIG. 1, the straddle-type vehicle 100 comprises a vehicle main body 10, a front wheel 20, and a rear wheel 30. The front wheel 20 is provided to the front part of the vehicle main body 10. The rear wheel 30 is provided to the rear part of the vehicle main body 10.

### Configuration of Vehicle Main Body

The vehicle main body 10 comprises a steering mechanism 1, a body frame 2, a single-cylinder engine 3, and a seat 4.

### Steering Mechanism

The steering mechanism 1 includes a handlebar 11. The steering mechanism 1 is supported by the body frame 2 so as to be able to rotate around a steering axis. The steering mechanism 1 supports the front wheel 20. The steering mechanism 1 steers the front wheel 20 according to operation of the handlebar 11.

The steering mechanism 1 has an upper bracket 12, an under bracket 13, two dampers 14, and a steering shaft (not shown).

The under bracket 13 is disposed under the upper bracket 12. The handlebar 11 is attached to the upper bracket 12.

The steering shaft extends in the up and down direction between the upper bracket 12 and the under bracket 13. The steering shaft is attached to the upper bracket 12 and the under bracket 13.

The two dampers 14 are disposed on the left and right of the steering shaft. The dampers 14 are attached to the upper bracket 12 and the under bracket 13. The dampers 14 extend downward from the upper bracket 12 beyond the under bracket 13. The dampers 14 support the front wheel 20 at their lower ends.

### Body Frame

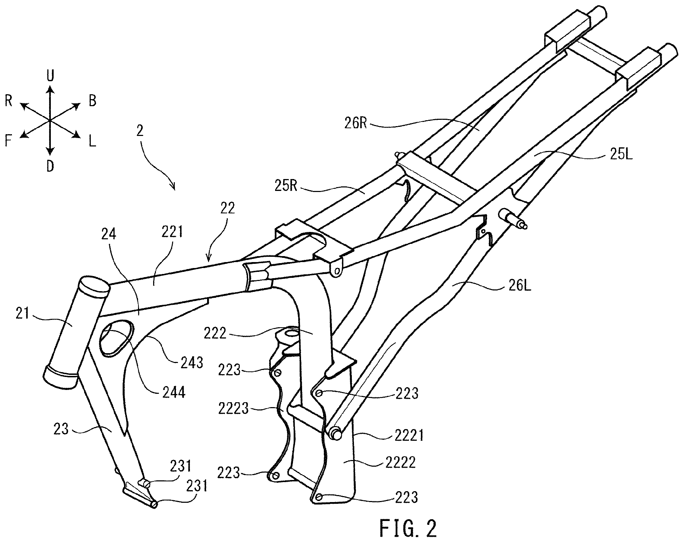

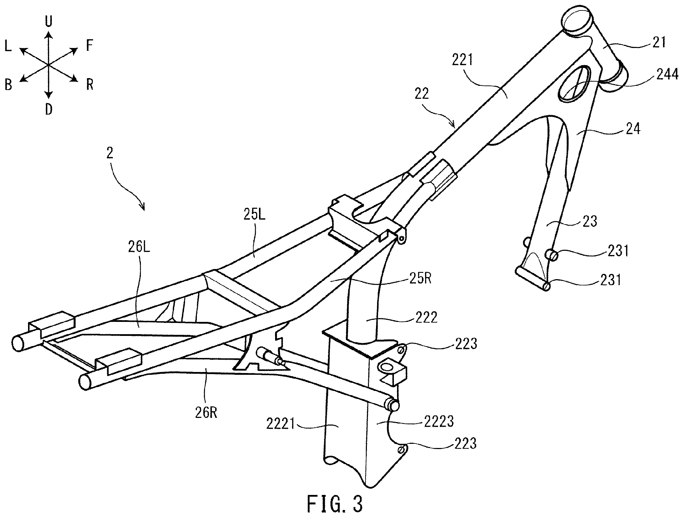

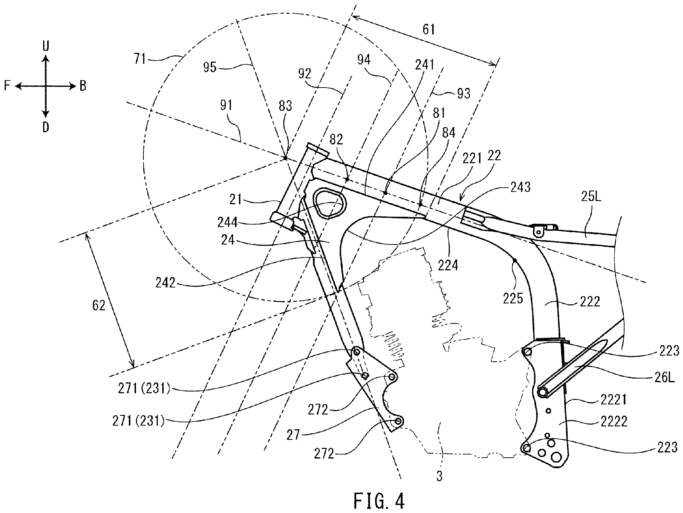

FIGS. 2 and 3 are an oblique front view and an oblique rear view of the body frame 2. FIG. 4 is a left side view of the front part of the body frame 2.

As shown in FIGS. 2 and 3, the body frame 2 has a head pipe 21, a main frame 22, a down frame 23, and connecting members 24. The body frame 2 further has a left seat frame 25L, a right seat frame 25R, a left rear frame 26L, and a right rear frame 26R.

### Head Pipe

The head pipe 21 is disposed at the front part of the body frame 2. The head pipe 21 extends in the up and down direction. More precisely, the head pipe 21 is inclined with respect to the up and down direction, and its upper end is disposed more to the rear than the lower end.

The steering shaft of the steering mechanism 1 (FIG. 1) is inserted into the head pipe 21. The steering shaft rotates around its center axis inside the head pipe 21. The center axis of the steering shaft corresponds to the steering axis of the steering mechanism 1. That is, the head pipe 21 supports the steering mechanism 1 so as to allow rotation around the steering axis.

### Main Frame

As shown in FIGS. 2 and 3, the main frame 22 is a single frame that is connected to the head pipe 21. The main frame 22 is disposed in the center in the vehicle width direction. In a vehicle side view, the main frame 22 is substantially L shaped. The main frame 22 includes a forward and backward extension 221 and an up and down extension 222.

The forward and backward extension 221 is disposed in the center in the vehicle width direction. The forward and backward extension 221 is connected to the head pipe 21. The front end of the forward and backward extension 221 is connected by welding or the like to the rear part of the head pipe 21.

The forward and backward extension 221 extends rearward from the head pipe 21. In this embodiment, the forward and backward extension 221 extends rearward and downward from the head pipe 21. Specifically, the forward and backward extension 221 is inclined with respect to the forward and backward direction so that its rear end is disposed lower than its front end.

The up and down extension 222 is similar to the forward and backward extension 221 in that it is disposed in the center in the vehicle width direction. The up and down extension 222 is formed integrally with the forward and backward extension 221. The up and down extension 222 extends downward from the rear end of the forward and backward extension 221.

The up and down extension 222 includes a mount 2221 for attaching the single-cylinder engine 3. The mount 2221 is disposed at the lower part of the up and down extension 222. The mount 2221 includes a left plate 2222 and a right plate 2223. The left plate 2222 and the right plate 2223 both have substantially the same shape. The right plate 2223 is disposed to the right of the left plate 2222, and is opposite the left plate 2222.

The up and down extension 222 has a plurality of attachment holes 223 for attaching the single-cylinder engine 3. The attachment holes 223 are through-holes for inserting bolts or other such fasteners. The attachment holes 223 are disposed lower than the lower end of the forward and backward extension 221. As shown in FIG. 4, the "lower end" of the forward and backward extension 221 means the inflection point 225 at which the lower edge 224 of the main frame 22 extending rearward from the head pipe 21 changes its direction to downward in a vehicle side view.

As shown in FIGS. 2 and 3, the attachment holes 223 are provided to the mount 2221 of the up and down extension 222. The attachment holes 223 are provided to the mount 2221 at the front end parts of the left plate 2222 and the right plate 2223. As shown in FIG. 2, two attachment holes 223 are disposed, one above the other, at the front end part of the left plate 2222. As shown in FIG. 3, two attachment holes 223 are disposed, one above the other, at the front end part of the right plate 2223.

### Down Frame

The down frame 23 is connected to the head pipe 21 below the connection between the head pipe 21 and the forward and backward extension 221. The upper end of the down frame 23 is connected by welding or the like to the rear part of the head pipe 21.

The down frame 23 extends downward from the head pipe 21. In this embodiment, the down frame 23 is inclined with respect to the up and down direction so that its lower end is located to the rear of the upper end.

The down frame 23 has a plurality of attachment holes 231 which configure the mount for the single-cylinder engine 3. The attachment holes 231 are through-holes for inserting bolts or other such fasteners. The attachment holes 231 are disposed lower than the lower end of the forward and backward extension 221. In a vehicle side view, the attachment holes 231 are disposed ahead of the front edge of the single-cylinder engine 3.

More specifically, the attachment holes 231 are provided to the lower part of the down frame 23. The attachment holes 231 are provided to the left and right side faces of the down frame 23. As shown in FIG. 2, two attachment holes 231 are disposed, one above the other, on the left side face of the lower part of the down frame 23. As shown in FIG. 3, two attachment holes 231 are disposed, one above the other, on the right side face of the lower part of the down frame 23.

In this embodiment, the mount for the single-cylinder engine 3 had by the down frame 23 is provided to the down frame 23 itself, and does not encompass some or all of the separate members from the down frame 23. As will be discussed below, the single-cylinder engine 3 is attached to the down frame 23 via a bracket 27, but the bracket 27 is a separate member from the down frame 23, and not part of the down frame 23, so the bracket 27 and through-holes 271 and 272 made in the bracket 27 do not correspond to the mount for the single-cylinder engine 3 had by the down frame 23. On the other hand, the attachment holes 231 are formed in the down frame 23 itself, and are therefore part of the mount for the single-cylinder engine 3 had by the down frame 23.

### Connecting Member

As shown in FIGS. 2 and 3, the body frame 2 in this embodiment has two connecting members 24. More specifically, one connecting member 24 is provided on the left side face of the main frame 22 and the left side face of the down frame 23, and the other connecting member 24 is provided on the right side face of the main frame 22 and the right side face of the down frame 23. The connecting members 24 connect the main frame 22 and the down frame 23. The connecting members 24 are in the form of plates.

As shown in FIG. 4, the connecting members 24 each have a main frame coupling portion 241 and a down frame coupling portion 242. The main frame coupling portion 241 is the portion of the connecting member 24 that is coupled to the forward and backward extension 221 of the main frame 22. The down frame coupling portion 242 is the portion of the connecting member 24 that is coupled to the down frame 23. The connecting members 24 are coupled by welding or the like to the forward and backward extension 221 and the down frame 23.

The main frame coupling portion 241 extends in the forward and backward direction of the vehicle. The main frame coupling portion 241 extends along the forward and backward extension 221. In the example in FIG. 4, the main frame coupling portion 241 is positioned below the axis 91 of the forward and backward extension 221 and extends along the axis 91 in a vehicle side view.

The front end of the main frame coupling portion 241 is disposed ahead of a point of intersection 81 between the axis 91 of the forward and backward extension 221 and a straight line 93 that is parallel to the steering axis 92 and passes through the lower end of the down frame coupling portion 242 in a vehicle side view. More preferably, the front end of the main frame coupling portion 241 is disposed ahead of a point of intersection 82 between the axis 91 of the forward and backward extension 221 and the center line 94 between the steering axis 92 and the straight line 93 in a vehicle side view. More preferably, the front end of the main frame coupling portion 241 is disposed ahead of the rear end of the head pipe 21 in a vehicle side view. The center line 94 is a straight line that is parallel to the steering axis 92 and the straight line 93, and is equidistant from the steering axis 92 and the straight line 93.

The rear end of the main frame coupling portion 241 is disposed to the rear of the straight line 93 that is parallel to the steering axis 92, and passes through the lower end of the down frame coupling portion 242 in a vehicle side view. That is, the main frame coupling portion 241 extends more to the rear than the point of intersection 81 between the straight line 93 and the axis 91 of the forward and backward extension 221. The rear end of the main frame coupling portion 241 is disposed ahead of the connection between the forward and backward extension 221 and the seat frames 25L and 25R.

In a vehicle side view, the distance 61 from the point of intersection 83 between the axis 91 of the forward and backward extension 221 and the axis 95 of the down frame 23 to the rear end of the main frame coupling portion 241 is greater than the distance 62 from the point of intersection 83 to the lower end of the down frame 23. That is, the rear ends of the main frame coupling portion 241 is disposed to the rear of the point of intersection 84 between the axis 91 of the forward and backward extension 221 and a circle 71 in a vehicle side view. The circle 71 is a circle that passes through the lower end of the down frame coupling portion 242 and whose center is the point of intersection 83 between the axis 91 of the forward and backward extension 221 and the axis 95 of the down frame down frame 23.

The down frame coupling portion 242 extends in the up and down direction of the vehicle. The down frame coupling portion 242 extends along the down frame 23. In the example in FIG. 4, the down frame coupling portion 242 is positioned to the rear of the axis 95 of the down frame 23 and extend along the axis 95 in a vehicle side view.

The upper end of the down frame coupling portion 242 is located near the head pipe 21. More specifically, the upper end of the down frame coupling portion 242 is located higher than the lower end of the head pipe 21. The upper end of the down frame coupling portion 242 is located higher than the rear end of the main frame coupling portion 241.

The lower end of the down frame coupling portion 242 is located lower than the forward and backward extension 221 and the upper end of the single-cylinder engine 3 attached to the down frame 23. The lower end of the down frame coupling portion 242 is located lower than the lower end of the forward and backward extension 221.

In a vehicle side view, at least part of the rear edge 243 of each connecting member 24 is located in front of a straight line that connects the rear end of the main frame coupling portion 241 with the lower end of the down frame coupling portion 242. In the example in FIG. 4, in a vehicle side view, the rear edge 243 has a concave shape that opens forward. In a vehicle side view, part of the edge 243 is positioned ahead of the straight line 93 that is parallel to the steering axis 92 and passes through the lower end of the down frame coupling portion 242.

Each connecting member 24 has an opening 244, whose purpose is to reduce weight. From the standpoint of increasing strength, each connecting member 24 is provided with a portion that is folded back toward the outside of the opening 244 along the peripheral edge of the opening 244. Also, from the standpoint of increasing strength, each connecting member 24 may be provided with a portion that is folded over forward along the edge 243.

### Seat Frames

As shown in FIGS. 2 and 3, the left seat frame 25L extends rearward from the forward and backward extension 221 of the main frame 22. The right seat frame 25R is disposed to the right of the left seat frame 25L and extends rearward from the forward and backward extension 221. The front ends of the left seat frame 25L and the right seat frame 25R are connected to the rear part of the forward and backward extension 221. The seat 4 is supported by the left seat frame 25L and the right seat frame 25R.

### Rear Frame

The left rear frame 26L and the right rear frame 26R are disposed lower than the left seat frame 25L and the right seat frame 25R. The left rear frame 26L extends rearward and upward from the up and down extension 222 of the main frame 22. The right rear frame 26R is disposed to the right of the left rear frame 26L and extends rearward and upward from the up and down extension 222.

The front ends of the left rear frame 26L and the right rear frame 26R are connected to the up and down extension 222. The rear end of the left rear frame 26L is connected to the rear part of the left seat frame 25L. The rear end of the right rear frame 26R is connected to the rear part of the right seat frame 25R.

### Single-Cylinder Engine

As shown in FIG. 4, in a vehicle side view, the single-cylinder engine 3 is disposed between the down frame 23 and the up and down extension 222. The single-cylinder engine 3 is disposed so that its upper end is located higher than the lower end of the down frame 23. The single-cylinder engine 3 is disposed so that its front end is located ahead of the rear end of the handlebar 11 (FIG. 1). The "rear end" of the handlebar 11 refers to the rear end of the handlebar 11 in a state in which the handlebar 11 is not turned, that is, a state in which the positions of the left and right sides of the handlebar 11 match up in the forward and backward direction.

The single-cylinder engine 3 is attached to the up and down extension 222. The term "attached" in this embodiment encompasses not only the direct linking of members, but also the linking of members via an intermediary member whose main purpose is to link members together. In this embodiment, the single-cylinder engine 3 is attached directly to the up and down extension 222. More specifically, the single-cylinder engine 3 is attached to the up and down extension 222 by inserting bolts or other such fasteners into the single-cylinder engine 3 and the attachment holes 223 of the up and down extension 222 and tightening.

One or more portions of the single-cylinder engine 3 can be attached to the up and down extension 222. In the example in FIG. 4, in a vehicle left side view, the single-cylinder engine 3 is attached at two places along its rear edge to the mount 2221 of the up and down extension 222. Similarly, in a vehicle right side view, the single-cylinder engine 3 is attached at two places along its rear edge to the mount 2221 of the up and down extension 222.

The single-cylinder engine 3 is also attached to the down frame 23. The single-cylinder engine 3 is attached to the down frame 23 via the bracket 27.

More specifically, the bracket 27 is attached to the down frame 23 by inserting bolts or other such fasteners into the attachment holes 231 of the down frame 23 and the through-holes 271 of the bracket 27, and tightening. Furthermore, the single-cylinder engine 3 is attached to the bracket 27 by inserting bolts or other such fasteners into the through-holes 272 of the bracket 27 and the single-cylinder engine 3, and tightening. The single-cylinder engine 3 is thus attached to the down frame 23.

One or more portions of the single-cylinder engine 3 can be attached to the down frame 23. In the example in FIG. 4, in a vehicle left side view, the single-cylinder engine 3 is attached at two places along its front edge to the down frame 23 via the bracket 27. Similarly, in a vehicle right side view, the single-cylinder engine 3 is attached at two places along its front edge to the down frame 23 via the bracket 27.

The single-cylinder engine 3 is not attached to the forward and backward extension 221. Specifically, the single-cylinder engine 3 is not directly linked to the forward and backward extension 221, nor is it linked to the forward and backward extension 221 via a bracket, stay, or other such intermediary member whose main purpose is to link members together. Thus, no attachment holes for attaching the single-cylinder engine 3 are provided to the forward and backward extension 221. Hence, the entire single-cylinder engine 3 is supported by the up and down extension 222 and the down frame 23. In particular, a continuous free space is provided between single-cylinder engine 3 and the forward and backward extension 221.

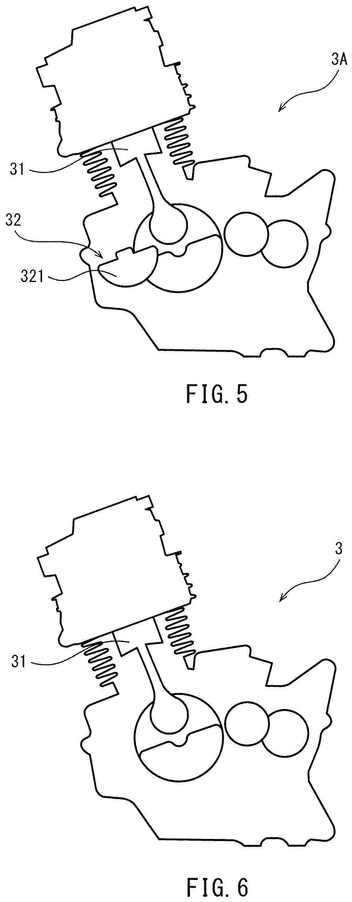

The internal structure of the single-cylinder engine 3 in this embodiment will now be described while being compared to the internal structure of the single-cylinder engine provided in a conventional vehicle. FIG. 5 is a simplified diagram of the internal structure of the single-cylinder engine 3A provided in a conventional vehicle. FIG. 6 is a simplified diagram of the internal structure of the single-cylinder engine 3 in this embodiment.

As shown in FIG. 5, the single-cylinder engine 3A provided in a conventional vehicle has one piston 31 that moves reciprocally in a single cylinder. The single-cylinder engine 3A has no other pistons to perform reciprocal operation in a different phase from the piston 31, and therefore the reciprocal operation of the piston 31 tends to produce more vibration.

The single-cylinder engine 3A has a balancer 32 as a means for damping the vibration generated by the reciprocal operation of the piston 31. The balancer 32 works by rotating a balancer weight 321 around a balancer shaft according to the reciprocal operation of the piston 31. The balancer weight 321 has enough weight to damp the vibration of the single-cylinder engine 3A. Consequently, momentum is generated in a different phase from that of the momentum based on the reciprocal operation of the piston 31, and this damps the vibration of the single-cylinder engine 3A.

On the other hand, as shown in FIG. 6, the single-cylinder engine 3 in this embodiment has no balancer 32. Therefore, the single-cylinder engine 3 is more lightweight than the single-cylinder engine 3A. As a result, the weight of the vehicle 100 equipped with the single-cylinder engine 3 is lighter than a conventional vehicle equipped with the single-cylinder engine 3A. On the other hand, with the vehicle 100, since the single-cylinder engine 3 is not attached to the forward and backward extension 221, the vibration of the single-cylinder engine 3 tends not to be transmitted to the handlebar 11 even though the single-cylinder engine 3 has no balancer 32.

### Effect of the Embodiment

As discussed above, with the straddle-type vehicle 100 pertaining to this embodiment, the single-cylinder engine 3 is not attached to the forward and backward extension 221, at least part of which is disposed in the center in the vehicle width direction. Therefore, the body frame 2 undergoes more elastic deformation. As a result, vibration of the single-cylinder engine 3 that is transmitted to the handlebar 11 can be reduced.

With the above-mentioned vehicle 100, because the vibration of the single-cylinder engine 3 that is transmitted to the handlebar 11 is reduced, the balancer can be eliminated as a means for damping engine vibration. Thus, with the vehicle 100, the vibration of the single-cylinder engine 3 that is transmitted to the handlebar 11 can be reduced, while the overall weight of the vehicle can be lowered.

With the above-mentioned vehicle 100, the pipe member that linked the main frame and the down frame in a conventional vehicle is eliminated, and the connecting members 24 that connected the main frame 22 and the down frame 23 are made larger. More specifically, each connecting members 24 is configured so that the lower end of the down frame coupling portion 242 is located lower than the upper end of the single-cylinder engine 3, and the coupled portion between the connecting member 24 and the down frame 23 is made larger. Consequently, the concentration of stress at the coupled portions between the connecting members 24 and the down frame 23 is moderated. Also, because the connecting member 24 is configured so that the rear end of the main frame coupling portion 241 is located to the rear of the straight line 93 that is parallel to the steering axis 92 and passes through the lower end of the down frame coupling portion 242 in a vehicle side view, the coupled portions between the connecting members 24 and the forward and backward extension 221 are made larger. Consequently, any load on the down frame 23 tends to be transmitted to the forward and backward extension 221, and the concentration of stress at the coupled portions between the connecting members 24 and the down frame 23 is further moderated. As a result, a decrease in the strength of the down frame 23 can be avoided.

With the above-mentioned vehicle 100, the connecting members 24 are made larger, but the pipe member provided in a conventional vehicle is eliminated. Also, since the single-cylinder engine 3 is not attached to the forward and backward extension 221, there is no need to provide a bracket, stay, or other such engine support to the forward and backward extension 221. Therefore, with the vehicle 100, adequate strength can be ensured in the down frame 23 while reducing the overall weight of the vehicle.

Thus, with the straddle-type vehicle 100 pertaining to this embodiment, the transmission of vibration of the single-cylinder engine 3 to the handlebar 11 can be curtailed, while avoiding a decrease in the strength of the down frame 23, and the overall weight of the vehicle can also be reduced.

With the above-mentioned vehicle 100, in a vehicle side view, the distance 61 from the point of intersection 83 between the axis 95 of the down frame 23 and the axis 91 of the forward and backward extension 221 to the rear end of the main frame coupling portion 241 is greater than the distance 62 from the point of intersection 83 to the lower end of the down frame 23. Consequently, adequate size can be more reliably ensured in the coupled portion between the connecting members 24 and the forward and backward extension 221, and any load that is exerted on the down frame 23 will more readily be transmitted to the forward and backward extension 221. As a result, the concentration of stress in the down frame 23 can be moderated, and a decrease in the strength of the down frame 23 can be avoided.

With the above-mentioned vehicle 100, the upper end of the down frame coupling portion 242 is located higher than the lower end of the head pipe 21. Accordingly, adequate size can be more reliably ensured in the coupled portion between the connecting members 24 and the down frame 23. Therefore, the concentration of stress in the coupled portion between the connecting members 24 and the down frame 23 can be further moderated. As a result, this more reliably avoids a decrease in the strength of the down frame 23.

With the above-mentioned vehicle 100, the front end of the main frame coupling portion 241 is located ahead of the point of intersection 82 between the axis 91 of the forward and backward extension 221 and the center line 94 between the steering axis 92 and a straight line 93 that is parallel to the steering axis 92 and passes through the lower end of the down frame coupling portion 242. Consequently, adequate size can be more reliably ensured in the coupled portion between the connecting members 24 and the forward and backward extension 221. Thus, load will more readily be transmitted from the down frame 23 to the forward and backward extension 221, and the concentration of stress in the down frame 23 will be moderated. As a result, a decrease in the strength of the down frame 23 can be avoided.

With the above-mentioned vehicle 100, the body frame 2 has a plurality of attachment holes 223 and 231 for attaching the single-cylinder engine 3. All of the attachment holes 223 and 231 are disposed lower than the lower end of the forward and backward extension 221. Specifically, the attachment holes 223 and 231 are not provided to the forward and backward extension 221. Thus, the single-cylinder engine 3 is not attached to the forward and backward extension 221 with the attachment holes 223 and 231, and vibration of the single-cylinder engine 3 that is transmitted to the handlebar 11 can be reduced.

With the above-mentioned vehicle 100, all of the attachment holes 223 and 231 are provided to the down frame 23 and the up and down extension 222. Thus, the single-cylinder engine 3 is attached only to the down frame 23 and the up and down extension 222, and not to the forward and backward extension 221. Therefore, vibration of the single-cylinder engine 3 that is transmitted to the handlebar 11 can be reduced.

### Other Embodiments

An embodiment was described above, but the present teaching is not limited to or by this embodiment.

With the vehicle 100 in the above embodiment, a single main frame 22 is disposed in the center in the vehicle width direction. However, the main frame 22 may be configured so that at least part of the forward and backward extension 221 is disposed in the center in the vehicle width direction. Specifically, as long as a single main frame extends from a head pipe, the main frame may branch off at some point.

With the above-mentioned vehicle 100, four of the attachment holes 223 are provided to the mount 2221 of the up and down extension 222, but there are no particular restrictions on the number and position of the attachment holes 223 in the up and down extension 222.

With the above-mentioned vehicle 100, the single-cylinder engine 3 is attached to the mount 2221 of the up and down extension 222, but may instead be attached to the up and down extension 222 using a bracket, stay, or other such intermediary member.

With the above-mentioned vehicle 100, four of the attachment holes 231 are provided to the lower part of the down frame 23, but there are no particular restrictions on the number and position of the attachment holes 231 in the down frame 23.

With the above-mentioned vehicle 100, the single-cylinder engine 3 is provided to the down frame 23 using the bracket 27, but may instead be attached directly to the down frame 23.

With the vehicle 100 in the above embodiment, the single-cylinder engine 3 has no balancer, but a single-cylinder engine 3A having a balancer may be used in place of the single-cylinder engine 3. Here again, the pipe member of a conventional vehicle is eliminated, and there is no need for an engine support on the forward and backward extension 221, so the overall weight of the vehicle can be reduced.

## Claims

1. A straddle-type vehicle, comprising:
a body frame (2);
a steering mechanism (1) that includes a handlebar (11) and is supported by the body frame (2) so as to be able to rotate around a steering axis (92);
a front wheel (20) that is supported by the steering mechanism (1); and
a single-cylinder engine (3) that is disposed so that its front end is located ahead of the rear end of the handlebar (11),
wherein the body frame (2) has:
a head pipe (21) that supports the steering mechanism (1);
a main frame (22) that includes a forward and backward extension (221) that is directly connected to the head pipe (21) and extends rearward from the head pipe (21) and at least part of which is disposed in the center in the vehicle width direction, and an up and down extension (222) that extends downward from the rear end of the forward and backward extension (221);
a down frame (23) that is directly connected to the head pipe (21) below the connection between the head pipe (21) and the forward and backward extension (221), and that extends downward from the head pipe (21); and
a connecting member (24) that connects the main frame (22) and the down frame (23), wherein the lower end of the down frame (23) is located higher than the lower end of the single-cylinder engine (3),
the single-cylinder engine (3) is attached to the up and down extension (222) and the down frame (23),
the entire single-cylinder engine (3) is supported by the up and down extension (222) and the down frame (23),
the down frame (23) has a mount for the single-cylinder engine (3) at a portion located ahead of the front edge of the single-cylinder engine (3) in a vehicle side view,
the connecting member (24) includes:
a main frame coupling portion (241) that extends in the vehicle forward and backward direction and is coupled to the forward and backward extension (221); and
a down frame coupling portion (242) that extends in the vehicle up and down direction and is coupled to the down frame (23),
the lower end of the down frame coupling portion (242) is located lower than the upper end of the single-cylinder engine (3), and
the rear end of the main frame coupling portion (241) is located to the rear of a straight line that is parallel to the steering axis (92) and passes through the lower end of the down frame coupling portion (242) in a vehicle side view.

2. A vehicle according to claim 1, wherein an axis (95) of the down frame (23) is a center axis that extends along the down frame (23) in up-down direction, an axis (91) of the forward and backward extension (221) is a center axis that extends along the forward and backward extension (221) in forward-backward direction.

3. A vehicle according to claim 2, wherein, in a vehicle side view, a distance (62) from a point of intersection (83) between the axis (95) of the down frame (23) and the axis (91) of the forward and backward extension (221) to the rear end of the main frame coupling portion (241) is longer than a distance (62) from a point of intersection (83) between the axis (95) of the down frame (23) and the axis (91) of the forward and backward extension (221) to the lower end of the down frame coupling portion (242).

4. A vehicle according to claim 2 or 3, wherein a front end of the main frame coupling portion (241) is located ahead of a point of intersection (82) between the axis (91) of the forward and backward extension (221) and a center line (94) between the steering axis (92) and a straight line (93) that is parallel to the steering axis (92) and passes through the lower end of the down frame coupling portion (242).

5. A vehicle according to any of claims 1 to 4, wherein an upper end of the down frame coupling portion (242) is located higher than a lower end of the head pipe (21).

6. A vehicle according to any of claims 1 to 5, wherein the body frame (2) has a plurality of attachment holes (223,231) for attaching the single-cylinder engine (3).

7. A vehicle according to claim 6, wherein the attachment holes (223,231) are all disposed lower than a lower end of the forward and backward extension (221).

8. A vehicle according to claim 6 or 7, wherein the attachment holes (223,231) are all provided to the down frame (23) and the up and down extension (222).

9. A vehicle according to any of claims 1 to 8, wherein single-cylinder engine (3) is not attached to the forward and backward extension (221).

10. A vehicle according to any of claims 1 to 9, wherein a continuous free space is provided between single-cylinder engine (3) and the forward and backward extension (221).

## Patentansprüche

1. Ein Spreiz-Sitz-Typ-Fahrzeug, das umfasst:
einen Körper-Rahmen (2);
einen Lenkmechanismus (1), welcher eine Lenkstange (11) beinhaltet und durch den Körper-Rahmen (2) gelagert ist, sodass dieser in der Lage ist um eine Lenkachse (92) zu rotieren;
ein Vorder-Rad (20), welches durch den Lenkmechanismus (1) gelagert ist; und
einen Ein-Zylinder-Motor (3), welcher positioniert ist, sodass dessen vorderes Ende vor dem hintern Ende der Lenkstange (11) positioniert ist,
wobei der Körper-Rahmen (2) aufweist:
ein Kopf-Rohr (21), welches den Lenkmechanismus (1) lagert;
einen Haupt-Rahmen (22), welcher eine Vowärts-und-Rückwärts-Erstreckung (221) beinhaltet, die direkt mit dem Kopf-Rohr (21) verbunden ist und sich nach hinten von dem Kopf-Rohr (21) erstreckt, und von der zumindest ein Teil in der Mitte in der Fahrzeug-Breiten-Richtung positioniert ist, und eine Oben-und-Unten-Erstreckung (222) beinhaltet, welche sich nach unten von dem hinteren Ende von der Vorwärts-und-Rückwärts-Erstreckung (221) erstreckt;
einen Unter-Rahmen (23), welcher direkt mit dem Kopf-Rohr (21) unterhalb der Verbindung mit dem Kopf-Rohr (21) und der Vorwärts-und-Rückwärts-Erstreckung (221) verbunden ist, und welcher sich nach unten von dem Kopf-Rohr (21) erstreckt; und
einem Verbindungselement (24), welches den Haupt-Rahmen (22) und den Unter-Rahmen (23) verbindet, wobei das untere Ende des Unter-Rahmen (23) höher angeordnet ist als das untere Ende des Ein-Zylinder-Motors (3),
der Ein-Zylinder-Motor (3) ist an der Oben-und-Unten-Erstreckung (222) und den Unter-Rahmen (23) angebracht,
der gesamte Ein-Zylinder-Motor ist durch die Oben-und-Unten-Erstreckung (222) und den Unter-Rahmen (23) gelagert,
der Unter-Rahmen (23) hat eine Montage für den Ein-Zylinder-Motor (3) an einem Abschnitt, der vor dem Vorder-Kante des Ein-Zylinder-Motors (3) in einer Fahrzeug-Seiten-Ansicht angeordnet ist,
das Verbindungselement (24) beinhaltet:
einen Haupt-Rahmen-Kopplungsabschnitt (241) der sich in die Fahrzeug-Vorwärts-und-Rückwärts-Richtung erstreckt und mit der Vorwärts-und-Rückwärts-Erstreckung (221) gekoppelt ist; und
einen Unter-Rahmen-Kopplungsabschnitt (242), welcher sich in die Fahrzeug-Oben-und-Unten-Richtung erstreckt und mit dem Unter-Rahmen (23) gekoppelt ist,
das untere Ende des Unter-Rahmen-Kopplungsabschnitts (242) ist unterhalb von dem oberen Ende des Ein-Zylinder-Motors (3) angeordnet, und
das hintere Ende des Haupt-Rahmen-Kopplungsabschnitts (241) ist hinter einer geraden Linie angeordnet, die parallel zu der Lenkachse (92) ist und durch das untere Ende des Unter-Rahmen-Kopplungsabschnitts (242) in der Fahrzeug-Seiten-Ansicht durchtritt.

2. Ein Fahrzeug gemäß Anspruch 1, wobei eine Achse (95) des Unter-Rahmens (23) eine Mittenachse ist, welche sich entlang des Unter-Rahmens (23) in die Oben-Unten-Richtung erstreckt, eine Achse (91) der Vowärts-und-Rückwärts-Erstreckung (221) ist eine Mittenachse, welche sich entlang der Vorwärts-und-Rückwärts-Erstreckung (221) in die Vorwärts-Rückwärts-Richtung erstreckt.

3. Ein Fahrzeug gemäß Anspruch 2, wobei in einer Fahrzeug-Seiten-Ansicht, ein Abstand (62) von einem Schnittpunkt (83) zwischen der Achse (95) des Unter-Rahmens (23) und der Achse (91) der Vorwärts-und-Rückwärts-Erstreckung (221) zu dem hintern Ende des Haupt-Rahmen-Kopplungsabschnitts (241) länger ist als ein Abstand (62) von einem Schnittpunkt (83) zwischen der Achse (95) des Unter-Rahmens (23) und der Achse (91) der Vorwärts-und-Rückwärts-Erstreckung (221) zu dem unteren Ende des Unter-Rahmen-Kopplungsabschnitts (242).

4. Ein Fahrzeug gemäß Anspruch 2 oder 3, wobei ein vorderes Ende des Haupt-Rahmen-Kopplungsabschnitts (241) vor einem Schnittpunkt (82) zwischen der Achse (91) der Vorwärts-und-Rückwärts-Erstreckung (221) und einer Mittenlinie (94) zwischen der Lenkachse (92) und einer geraden Linie (93), die parallel zu der Lenkachse (92) ist und durch das untere Ende des Unter-Rahmen-Kopplungsabschnitts (242) hindurchtritt, angeordnet ist.

5. Ein Fahrzeug gemäß irgendeinem der Ansprüche 1 bis 4, wobei ein oberes Ende des Unter-Rahmen-Kopplungsabschnitts (242) höher angeordnet ist als ein unteres Ende des Kopf-Rohrs (21).

6. Ein Fahrzeug gemäß irgendeinem der Ansprüche 1 bis 5, wobei der Körper-Rahmen (2) eine Mehrzahl von Anbringungslöchern (223, 231) zum Anbringen des Ein-Zylinder-Motors (3) hat.

7. Ein Fahrzeug gemäß Anspruch 6, wobei die Anbringungslöcher (223, 231) alle niedriger positioniert sind als ein unteres Ende der Vorwärts-und-Rückwärts-Erstreckung (221).

8. Ein Fahrzeug gemäß Anspruch 6 oder 7, wobei die Anbringungslöcher (223, 231) alle an dem Unter-Rahmen (23) und der Oben-und-Unten-Erstreckung (222) vorgesehen sind.

9. Ein Fahrzeug gemäß irgendeinem der Ansprüche 1 bis 8, wobei der Ein-Zylinder-Motor (3) nicht an der Vorwärts-und-Rückwärts-Erstreckung (221) angebracht ist.

10. Ein Fahrzeug gemäß irgendeinem der Ansprüche 1 bis 9, wobei ein kontinuierlicher Freiraum zwischen dem Ein-Zylinder-Motor (3) und der Vorwärts-und-Rückwärts-Erstreckung (221) vorgesehen ist.

## Revendications

1. Véhicule de type à selle comprenant :
un cadre (2),
un mécanisme de direction (1) qui inclut un guidon (11) et qui est supporté par le cadre (2) de façon à pouvoir tourner autour d'un axe de direction (92),
une roue avant (20) qui est supportée par le mécanisme de direction (1), et
un moteur monocylindre (3) qui est placé de sorte à ce que son extrémité avant soit située en avant de l'extrémité arrière du guidon (11),
dans lequel le cadre (2) comporte :
un tube de fourche (21) qui supporte le mécanisme de direction (1),
un châssis principal (22) qui inclut une extension avant et arrière (221) qui est reliée directement au tube de fourche (21) et s'étend vers l'arrière depuis le tube de fourche (21), et dont au moins une partie est placée au centre dans la direction de la largeur du véhicule, ainsi qu'une extension haut et bas (222) qui s'étend vers le bas depuis l'extrémité arrière de l'extension avant et arrière (221),
un châssis bas (23) qui est directement raccordé au tube de fourche (21) en dessous du raccordement entre le tube de fourche (21) et l'extension avant et arrière (221) et qui s'étend vers le bas depuis le tube de fourche (21), et
un élément de raccordement (24) qui relie le châssis principal (22) et le châssis bas (23), l'extrémité inférieure du châssis bas (23) étant située plus haut que l'extrémité inférieure du moteur monocylindre (3),
le moteur monocylindre (3) est fixé à l'extension haut et bas (222) et au châssis bas (23),
le moteur monocylindre (3) dans son entier est supporté par l'extension haut et bas (222) et le châssis bas (23),
le châssis bas (23) comporte un bâti pour le moteur monocylindre (3) au niveau d'une partie située en avant du bord avant du moteur monocylindre (3) dans une vue latérale du véhicule,
l'élément de raccordement (24) inclut :
un organe de couplage de châssis principal (241) qui s'étend dans la direction avant et arrière du véhicule et qui est accouplé à l'extension avant et arrière (221), et
un organe de couplage de châssis bas (242) qui s'étend dans la direction de haut en bas du véhicule et qui est accouplé au châssis bas (23),
l'extrémité inférieure de l'organe de couplage de châssis bas (242) est située plus bas que l'extrémité supérieure du moteur monocylindre (3), et
l'extrémité arrière de l'organe de couplage de châssis principal (241) est située à l'arrière d'une ligne droite parallèle à l'axe de direction (92) et traverse l'extrémité inférieure de l'organe de couplage de châssis bas (242) dans une vue latérale du véhicule.

2. Véhicule selon la revendication 1, dans lequel un axe (95) du châssis bas (23) représente un axe central qui s'étend le long du châssis bas (23) dans la direction de haut en bas, un axe (80) de l'extension avant et arrière (221) représentant l'axe central qui s'étend le long de l'extension avant et arrière (221) dans la direction avant arrière.

3. Véhicule selon la revendication 2, dans lequel, dans une vue latérale du véhicule, la distance (62) depuis le point d'intersection (83) entre l'axe (95) du châssis bas (23) et l'axe (91) de l'extension avant et arrière (221) vers l'extrémité arrière de l'organe de couplage de châssis principal (241) est plus longue que la distance (62) depuis le point d'intersection (83) entre l'axe (95) du châssis bas (23) et l'axe (91) de l'extension avant et arrière (221) vers l'extrémité inférieure de l'organe de couplage de châssis bas (242).

4. Véhicule selon la revendication 2 ou la revendication 3, dans lequel l'extrémité avant de l'organe de couplage de châssis principal (241) est située en avant du point d'intersection (82) entre l'axe (91) de l'extension avant et arrière (221) et l'axe central (94) entre l'axe de direction (92) et une ligne droite (93) parallèle à l'axe de direction (92) et qui traverse l'extrémité inférieure de l'organe de couplage de châssis bas (242).

5. Véhicule selon l'une quelconque des revendications 1 à 4, dans lequel l'extrémité supérieure de l'organe de couplage de châssis bas (242) est située plus haut que l'extrémité inférieure du tube de fourche (21).

6. Véhicule selon l'une quelconque des revendications 1 à 5, dans lequel le cadre (2) comporte une pluralité de trous de fixation (223, 231) pour fixer le moteur monocylindre (3).

7. Véhicule selon la revendication 6, dans lequel les trous de fixation (223, 231) sont tous disposés plus bas que l'extrémité inférieure de l'extension avant et arrière (221).

8. Véhicule selon la revendication 6 ou la revendication 7, dans lequel les trous de fixation (223, 231) sont tous ménagés sur le châssis bas (23) et sur l'extension haut et bas (222).

9. Véhicule selon l'une quelconque des revendications 1 à 8, dans lequel le moteur monocylindre (3) n'est pas fixé à l'extension avant et arrière (221).

10. Véhicule selon l'une quelconque des revendications 1 à 9, dans lequel un espace libre continu est prévu entre le moteur monocylindre (3) et l'extension avant et arrière (221).
